# EUROPÄISCHE PATENTSCHRIFT

(11) **EP 3 807 212 B1**
(45) Veröffentlichungstag und Bekanntmachung des Hinweises auf die Patenterteilung: **06.09.2023**
(21) Anmeldenummer: 19730292.0
(22) Anmeldetag: 06.06.2019
(51) Int. Cl.: C01B 17/04, C01F 11/46, C10G 19/02, C10G 45/02, C10G 67/10

(54) **VORRICHTUNG UND VERFAHREN ZUR ENTSCHWEFELUNG VON ERDÖL**
DEVICE AND METHOD FOR DESULFURIZING CRUDE OIL
DISPOSITIF ET PROCÉDÉ DE DÉSULFURATION DE PÉTROLE BRUT

(30) Priorität: 18.06.2018 DE 102018114536
(43) Veröffentlichungstag der Anmeldung: 21.04.2021
(73) Patentinhaber: Knauf Gips KG, 97346 Iphofen (DE)
(72) Erfinder: HUELLER, Rolf, 97332 Volkach (DE)
(74) Vertreter: Schlögl, Markus
(86) Internationale Anmeldenummer: PCT/EP2019/064833
(87) Internationale Veröffentlichungsnummer: WO 2019/243075

(56) Entgegenhaltungen:
- EP-A1- 0 781 589
- EP-B1- 2 702 325
- WO-A1-2016/037258
- US-A- 4 884 396

## Beschreibung

Die Erfindung betrifft eine Vorrichtung und ein Verfahren zur Entschwefelung von Erdöl.

Erdöl muss nach seiner Förderung zunächst aufbereitet werden. Ein wesentlicher Schritt ist die Entfernung von Schwefel. Ein zentraler Schritt der Erdölaufbereitung ist die Entschwefelung durch Hydrierung in einem sogenannten Hydrofiner. Das schwefelhaltige Erdöl wird zunächst mit Wasserstoff vermischt und erhitzt. In einem Reaktor reagiert das heiße Gemisch an einem Katalysator, wobei die im Erdöl enthaltenen schwefelhaltigen Verbindungen mit dem Wasserstoff zu Schwefelwasserstoff umgesetzt wird. Anschließend wird das entschwefelte Erdöl von Schwefelwasserstoff getrennt, beispielsweise mittels Aminwäsche. Während das entschwefelte Erdöl einer weiteren Aufbereitung zugeführt wird, wird der schwefelwasserstoffhaltige Abgasstrom, der als "Acid Gas" bezeichnet wird, einer Schwefelrückgewinnung zugeführt, beispielsweise nach dem Claus Prozess. Die Schwefelrückgewinnung stellt elementaren Schwefel als Rohstoff zur Verfügung.

Aus Erdöl wird unter anderem Schweröl für Schiffe gewonnen, bei dem derzeit ein Schwefelanteil von bis zu 3,5 % erlaubt ist. Der Schwefelanteil im Schweröl für Schiffe muss allerdings in den nächsten Jahren auf 0,5 % abgesenkt werden. Hierfür können die vorgenannten bekannten Verfahren eingesetzt werden. Dies würde allerdings dazu führen, dass mehr elementarer Schwefel als bisher als Rohstoff zur Verfügung stehen würde. Weltweit besteht allerdings kein entsprechender Bedarf an Schwefel, so dass es sich als schwierig erweist, den durch die Entschwefelung zur Verfügung gestellten elementaren Schwefel einer Verwendung zuzuführen.

EP 2 702 325 B1 betrifft ein Verfahren und eine Vorrichtung zur Erzeugung von Strom und Gips aus schwefelwasserstoffhaltigen Abgasen. Aus WO 2016/037258 A1 ist ein Verfahren zur Herstellung von Kaliumsulfat und Methanol aus Schwefelwasserstoff bekannt. US 4 884 396 A offenbart ein Verfahren zur Behandlung eines schwefelwasserstoffhaltigen Gases. EP 0 781 589 A1 beschreibt ein Verfahren zur Herstellung von Gips.

Der vorliegenden Erfindung liegt die Aufgabe zugrunde, eine Vorrichtung und ein Verfahren anzugeben, die bzw. das die anfallende Schwefelmenge bei der Entschwefelung von Erdöl reduziert und zusätzlich oder alternativ zu elementarem Schwefel weitere Produkte herstellt.

Diese Aufgabe wird hinsichtlich der Vorrichtung durch die Merkmale des Anspruchs 1 und hinsichtlich des Verfahrens durch die Merkmale des Anspruchs 5 gelöst. Vorteilhafte Ausgestaltungen und Weiterbildungen sind in den jeweils abhängigen Ansprüchen angegeben.

Die Erfindung sieht eine Vorrichtung zur Entschwefelung von Erdöl vor, umfassend
a) eine Entschwefelungsanlage für schwefelhaltiges Erdöl, die neben dem entschwefelten Erdöl ein schwefelwasserstoffhaltiges "Acid Gas" bildet,
b) eine Anlage zur Gewinnung von elementarem Schwefel und eines schwefelwasserstoffhaltigen "Tail Gas" als Abgas aus "Acid Gas" der Entschwefelungsanlage,
c) eine Vorrichtung zur Erzeugung von Strom und Gips aus "Tail Gas" oder aus "Acid Gas" oder aus einem Gemisch aus "Acid Gas" und "Tail Gas",
d) ein Gasleitungssystem zur Zuführung von "Acid Gas" von der Entschwefelungsanlage zur Anlage zur Gewinnung von elementarem Schwefel und zur Vorrichtung zur Erzeugung von Strom und Gips sowie zur Zuführung von "Tail Gas" von der Anlage zur Gewinnung von elementarem Schwefel zur Vorrichtung zur Erzeugung von Strom und Gips, d1) wobei das Gasleitungssystem eine Gasverteilereinrichtung aufweist, die in einer ersten Stellung "Acid Gas" ausschließlich der Anlage zur Gewinnung von elementarem Schwefel zuführt, in einer zweiten Stellung "Acid Gas" ausschließlich der Vorrichtung zur Erzeugung von Strom und Gips zuführt, und in einer Verteilerstellung einen ersten Teil des "Acid Gas" der Anlage zur Gewinnung von elementarem Schwefel und einen zweiten Teil des "Acid Gas" der Vorrichtung zur Erzeugung von Strom und Gips zuführt.

Die Erfindung sieht vor, dass die Vorrichtung zur Erzeugung von Strom und Gips umfasst:
c1) eine Stromerzeugungseinrichtung umfassend eine Verbrennungseinrichtung zur Verbrennung von "Tail Gas" oder "Acid Gas" oder einer Mischung aus "Tail Gas" und "Acid Gas", wobei die bei der Verbrennung freiwerdende Energie zumindest teilweise zur Stromerzeugung eingesetzt wird, und
c2) eine Rauchgasentschwefelungsanlage zur Entschwefelung der bei der Verbrennung entstehende schwefeloxidhaltige Verbrennungsabgase unter Bildung von Gips,

Erfindungsgemäß umfasst die Vorrichtung zur Entschwefelung von Erdöl
e) eine Messeinrichtung zur Ermittlung der Zusammensetzung und/oder des Heizwertes des Gases vor der Verbrennung in der Verbrennungseinrichtung, und
f) eine Auswertungseinrichtung zum Vergleich der ermittelten Zusammensetzung mit einer vorgegebenen Zusammensetzung oder einer vorgegebenen Zusammensetzungsbandbreite und/oder zum Vergleich des ermittelten Heizwertes mit einem vorgegebenen Heizwert oder einer vorgegebenen Heizwertbandbreite.

Erfindungsgemäß umfasst die Vorrichtung zur Entschwefelung von Erdöl in einer ersten Variante eine Steuereinrichtung und eine Zuführeinrichtung für Erdgas, wobei die Steuereinrichtung bei einem von der Auswertungseinrichtung ermittelten Abweichen von der vorgegebenen Zusammensetzung oder Zusammensetzungsbandbreite und/oder von dem vorgegebenen Heizwert oder der vorgegebenen Heizwertbandbreite einen zur Korrektur erforderlichen zusätzlicher Anteil an Erdgas ermittelt und dem Gas vor der Verbrennung über die Zuführeinrichtung zumischt. Dadurch lässt sich sicherstellen, dass eine für die vorgesehene Verbrennung möglichst optimale Zusammensetzung der zu verbrennenden Gase vorliegt.

Alternativ oder additiv hierzu umfasst die erfindungsgemäße Vorrichtung zur Entschwefelung von Erdöl eine Steuereinrichtung, wobei die Steuereinrichtung zur Korrektur das Mischverhältnis zwischen "Tail Gas" und zweitem Teil des "Acid Gas" anpasst. Diese Anpassung des Mischverhältnisses erfolgt insbesondere zur Anpassung des Schwefelwasserstoffanteils im der Verbrennungseinrichtung zugeführten Gas. Die Anpassung kann beispielsweise mittels der Gasverteilereinrichtung erfolgen.

Die Entschwefelung gemäß Schritt b) kann beispielsweise, wie eingangs beschrieben, mittels einer Hydrierung, insbesondere in einem sogenannten Hydrofiner, und anschließender Aminwäsche erfolgen. Die Gewinnung von elementarem Schwefel gemäß Schritt c) kann beispielsweise mittels eines Claus Prozesses erfolgen.

Die Entschwefelungsanlage entschwefelt das Erdöl beispielsweise, wie eingangs beschrieben, mittels einer Hydrierung, insbesondere in einem sogenannten Hydrofiner, und anschließender Aminwäsche. Die Anlage zur Gewinnung von elementarem Schwefel aus "Acid Gas" der Entschwefelungsanlage arbeitete beispielsweise mit einem Claus Prozess.

Die Gasverteilereinrichtung kann so ausgebildet sein, dass sie in der Verteilerstellung eine Einstellung der Menge des "Acid Gas", die als erster Teil des "Acid Gas" der Anlage zur Gewinnung von elementarem Schwefel zugeführt wird, und der Menge des "Acid Gas", die als zweiter Teil des "Acid Gas" der Vorrichtung zur Erzeugung von Strom und Gips zuführt wird, ermöglicht. Mit anderen Worten: Das Verhältnis zwischen erstem Teil und zweitem Teil des "Acid Gas" kann in der Verteilerstellung mittels der Gasverteilereinrichtung eingestellt werden.

Die Vorteile der Erfindung liegen insbesondere darin, dass der Schwefeloxidgehalt im gereinigten Abgas nach der Rauchgasentschwefelung durch die vorgeschaltete Kombination aus einem Prozess zur Gewinnung elementaren Schwefels und einem Prozess zur Stromerzeugung mittels Gasverbrennung weiter reduziert wird und damit niedriger als im Tail Gas ist. Ferner lassen sich die beiden Teilverfahren Schwefelgewinnung und Verbrennung zur Stromerzeugung durch die Einstellung des Mischverhältnisses zwischen Tail Gas und zweitem Teil von Acid Gas jeweils unter optimierten Bedingungen, insbesondere bei einem bevorzugten Schwefelwasserstoffanteil, betreiben. Ein weiterer Vorteil ist, dass die schwefelwasserstoffhaltigen Gase nicht mehr ungenutzt entweichen, sondern dass sie energetisch verwertet werden, indem sie zur Stromerzeugung eingesetzt werden.

Ein weiterer wichtiger Vorteil ist, dass sich die Menge an anfallendem elementaren Schwefel reduziert, da Schwefel nunmehr auch in Form von Gips eingelagert wird. Im Vergleich zu elementarem Schwefel besteht ein hoher Bedarf an Gips für verschiedenste Gipsprodukte.

Vorzugsweise liegt die Verbrennungstemperatur in der Verbrennungseinrichtung bei mindestens 1.000 °C. Dies hat den Vorteil, dass bei derart hohen Verbrennungstemperaturen auch schädliche Begleitstoffe wie Kohlenmonoxid, Benzol und sonstige Schwefelverbindungen vollständig zu Kohlendioxid, Schwefeloxid und Wasser verbrennen und damit im Verbrennungsabgas nicht mehr oder zumindest nur deutlich reduziert vorkommen.

Eine Weiterbildung der Erfindung sieht vor, dass die Verbrennungseinrichtung der Stromerzeugungseinrichtung einen Dampferzeuger umfasst oder ein Dampferzeuger ist, der Teil des thermodynamischen Kreislaufes eines Dampfkraftprozesses ist, der wiederum eine dem Dampferzeuger nachgeschaltete Dampfturbine und einen der Dampfturbine nachgeschalteten Kondensator umfasst. Zur Stromerzeugung ist ein von der Dampfturbine angetriebener Generator vorgesehen. Die bei der Verbrennung in der Verbrennungseinrichtung freiwerdende Energie wird in diesem Fall dadurch zumindest teilweise zur Stromerzeugung eingesetzt, dass die freiwerdende Energie zunächst zumindest teilweise im Dampferzeuger zur Dampferzeugung eingesetzt wird und der erzeugte Dampf dann zumindest teilweise der Dampfturbine zugeführt wird, die zur Stromerzeugung den Generator antreibt. Es kann auch vorgesehen sein, den Dampf zumindest teilweise abzuzweigen und einer thermischen Nutzung zuzuführen, beispielsweise zu Heiz- bzw. Erwärmungszwecken.

Alternativ oder additiv kann die Stromerzeugungseinrichtung auch eine Gasturbine und/oder einen Gasmotor umfassen. Zur Stromerzeugung ist in diesem Fall ein von der Gasturbine und/oder dem Gasmotor angetriebener Generator vorgesehen.

Beispielsweise kann die vorgegebene Zusammensetzung oder die vorgegebenen Zusammensetzungsbandbreite folgende Anteile in Molprozent vorsehen:
Schwefelwasserstoff: 3% bis 70%, insbesondere 40% bis 60%, vorzugsweise etwa 50%, und/oder
Kohlendioxid: 10% bis 90%, insbesondere 40% bis 60%, vorzugsweise etwa 50%.

Alternativ oder additiv kann der vorgegebene Heizwert oder die vorgegebene Heizwertbandbreite bei 9 bis 30 MJ/m³ (in Normbedingungen), insbesondere bei 15 bis 25 MJ/m³ (in Normbedingungen), vorzugsweise bei etwa 20 MJ/m³ (in Normbedingungen) liegen.

Da die Verbrennungsabgase einen im Vergleich zu üblichen Verbrennungsabgasen sehr hohen Schwefeloxidanteil (insbesondere Schwefeldioxid- und Schwefeltrioxidanteil) haben, kann es zweckmäßig sein, eine mehrstufige Rauchgasentschwefelungsanlage vorzusehen, vorzugsweise eine mehrstufige Rauchgasentschwefelungsanlage umfassend einen Festbettreaktor zur Schwefeltrioxidabscheidung und eine Kalkwäsche (Nasswäsche) zur Schwefeldioxidabscheidung.

Beispielsweise kann bei einer mehrstufigen Rauchgasentschwefelungsanlage in einer Verfahrensstufe, vorzugsweise in einer ersten Verfahrensstufe, Schwefeltrioxid in einem Festbettreaktor abgeschieden werden. In einer anderen Verfahrensstufe kann Schwefeldioxid in der Nasswäsche abgeschieden werden. Im Festbettreaktor kann Kalkstein verwendet werden, beispielsweise der Körnung 4/6 mm. Zur Nasswäsche kann Kalksteinmehl eingesetzt werden, beispielsweise mit folgender Körnung: 90% unter 0,063 mm.

Ein wesentlicher Vorteil dieser mehrstufigen Rauchgasentschwefelungsanlage ist das Abscheiden von Schwefeltrioxid. Das Schwefeltrioxid würde eine reine Nasswäsche nahezu unverändert passieren, das heißt ohne den Festbettreaktor in einer der Verfahrensstufen würde das Schwefeltrioxid den Kamin erreichen und am Kaminaustritt Aerosolnebel bilden. Gerade bei der gemäß der Erfindung vorgesehenen Verbrennung schwefelwasserstoffhaltiger Abgase aus der Entschwefelung von schwefelhaltigem Erdöl ist der Anteil von Schwefeltrioxid relativ hoch, und dementsprechend kommt hier einer mehrstufigen Rauchgasentschwefelungsanlage mit Festbettreaktor zum Abscheiden von Schwefeltrioxid besondere Bedeutung zu.

Mit der erfindungsgemäßen Vorrichtung lassen sich Schwefeloxide zu über 99,9% aus dem "Acid Gas" abscheiden bzw. der Restanteil an Schwefeloxiden liegt bei unter 100 mg/m³ (in Normbedingungen).

Eine Weiterbildung der Erfindung sieht vor, dass die Vorrichtung zur Erzeugung von Strom und Gips ein Gipswerk umfasst, das den bei der Rauchgasentschwefelung entstehenden Gips zur Herstellung von Gipsprodukten einsetzt, beispielsweise bei der Herstellung von Gipskartonplatten und/oder Fertiggipsmischungen.

Das vorgenannte Gipswerk kann derart eingerichtet sein, dass es seinen Bedarf an elektrischer Energie ganz oder teilweise aus der Stromerzeugungseinrichtung deckt. Auch kann das Gipswerk derart eingerichtet sein, dass es seinen Wärmebedarf ganz oder teilweise den bei der Verbrennung der Gase in der Verbrennungseinrichtung entstehenden Verbrennungsgasen und/oder den Stromerzeugungs-Prozessen, insbesondere dem thermodynamischen Kreislauf des Dampfkraftprozesses, entnimmt. Ist vorgesehen, den Wärmebedarf ganz oder teilweise dem Dampfkraftprozess zu entnehmen, so kann dies dadurch erfolgen, dass Dampf über eine Abzweigung direkt dem Gipswerk zu Heiz- bzw. Erwärmungszwecken zugeführt wird. Beispielsweise kann der Dampf zur Erwärmung der Trocknungs- und/oder Kalziniereinrichtungen des Gipswerks eingesetzt werden. Ein wesentlicher Vorteil hierbei ist, dass sich auf diese Weise eine Kohlendioxidabgabe des Gipswerks an die Umwelt vermeiden lässt.

Das erfindungsgemäße Verfahren zur Entschwefelung von Erdöl setzt die erfindungsgemäße Vorrichtung ein und umfasst folgende Schritte:
a) Bereitstellung von schwefelhaltigem Erdöl;
b) Entschwefelung des schwefelhaltigen Erdöls mittels der Entschwefelungsanlage, wobei neben dem entschwefelten Erdöl ein schwefelwasserstoffhaltiges "Acid Gas" gebildet wird;
c) Einstellung der Gasverteilereinrichtung des Gasleitungssystems in die erste Stellung oder in die zweite Stellung oder in die Verteilerstellung, wobei in der ersten Stellung "Acid Gas" ausschließlich der Anlage zur Gewinnung von elementarem Schwefel zugeführt wird, in der zweiten Stellung "Acid Gas" ausschließlich der Vorrichtung zur Erzeugung von Strom und Gips zugeführt wird, und in der Verteilerstellung ein erster Teil des "Acid Gas" der Anlage zur Gewinnung von elementarem Schwefel und eines schwefelwasserstoffhaltigen "Tail Gas" und ein zweiter Teil des "Acid Gas" der Vorrichtung zur Erzeugung von Strom und Gips zugeführt wird;
d) Erzeugung von Strom und Gips aus "Tail Gas" oder aus "Acid Gas" oder aus einem Gemisch aus "Acid Gas" und "Tail Gas" mittels der Vorrichtung zur Erzeugung von Strom und Gips,
   d1) wobei "Tail Gas" oder "Acid Gas" oder einer Mischung aus "Tail Gas" und "Acid Gas" der Verbrennungseinrichtung der Stromerzeugungseinrichtung zugeführt und dort verbrannt wird, wobei die bei der Verbrennung freiwerdende Energie zumindest teilweise zur Stromerzeugung eingesetzt wird,
   d2) wobei bei der Verbrennung entstehende schwefeloxidhaltige Verbrennungsabgase einer Rauchgasentschwefelung mittels der Rauchgasentschwefelungsanlage zugeführt werden, und
   d3) wobei bei der Rauchgasentschwefelung Gips gebildet wird,
e) wobei die Zusammensetzung und/oder der Heizwert des der Stromerzeugungseinrichtung (4) gemäß Schritt d1) zugeführten Gases vor der Verbrennung in der Verbrennungseinrichtung (6) ermittelt wird,
f) wobei die ermittelte Zusammensetzung mit einer vorgegebenen Zusammensetzung oder einer vorgegebenen Zusammensetzungsbandbreite und/oder der ermittelte Heizwert mit einem vorgegebenen Heizwert oder einer vorgegebenen Heizwertbandbreite verglichen wird, und
g) wobei bei einem Abweichen von der vorgegebenen Zusammensetzung oder Zusammensetzungsbandbreite und/oder von dem vorgegebenen Heizwert oder der vorgegebenen Heizwertbandbreite ein zur Korrektur erforderlicher zusätzlicher Anteil an Erdgas ermittelt und dem Gas vor der Verbrennung zugemischt wird und/oder wobei zur Korrektur das Mischverhältnis zwischen "Tail Gas" (108) und zweitem Teil des "Acid Gas" (104) anpasst wird.

Die Vorteile des erfindungsgemäßen Verfahrens ergeben sich aus den vorstehend beschriebenen Vorteilen der erfindungsgemäßen Vorrichtung.

Vorzugsweise erfolgt die Verbrennung gemäß Schritt d1) bei einer Verbrennungstemperatur von mindestens 1.000 °C.

Eine Weiterbildung des Verfahrens geht aus von einer Vorrichtung, bei der die Verbrennungseinrichtung der Stromerzeugungseinrichtung einen Dampferzeuger umfasst oder ein Dampferzeuger ist, der Teil des thermodynamischen Kreislaufes eines Dampfkraftprozesses ist, der wiederum eine dem Dampferzeuger nachgeschaltete Dampfturbine und einen der Dampfturbine nachgeschalteten Kondensator umfasst. In diesem Fall kann das Verfahren vorsehen, dass die bei der Verbrennung freiwerdende Energie dadurch zumindest teilweise zur Stromerzeugung eingesetzt wird, dass die freiwerdende Energie zunächst zumindest teilweise im Dampferzeuger zur Dampferzeugung eingesetzt wird und der erzeugte Dampf dann zumindest teilweise der Dampfturbine zugeführt wird, die zur Stromerzeugung einen Generator antreibt. Es kann auch vorgesehen werden, den Dampf zumindest teilweise abzuzweigen und einer thermischen Nutzung zuzuführen, beispielsweise zu Heiz- bzw. Erwärmungszwecken.

Falls die die Stromerzeugungseinrichtung der Vorrichtung eine Gasturbine und/oder einen Gasmotor umfasst, kann das Verfahren auch vorsehen, dass die Stromerzeugung durch einen von der Gasturbine und/oder dem Gasmotor angetriebenen Generator erfolgt.

Beispielsweise kann die vorgegebene Zusammensetzung oder die vorgegebenen Zusammensetzungsbandbreite folgende Anteile in Molprozent vorsehen:
Schwefelwasserstoff: 3% bis 70%, insbesondere 40% bis 70%, vorzugsweise etwa 50%, und/oder
Kohlendioxid: 10% bis 90%, insbesondere 40% bis 60%, vorzugsweise etwa 50%.

Alternativ oder additiv kann der vorgegebene Heizwert oder die vorgegebene Heizwertbandbreite bei 9 bis 30 MJ/m³ (in Normbedingungen), insbesondere bei 15 bis 25 MJ/m³ (in Normbedingungen), vorzugsweise bei etwa 20 MJ/m³ (in Normbedingungen) liegen.

Da die Verbrennungsabgase einen im Vergleich zu üblichen Verbrennungsabgasen sehr hohen Schwefeloxidanteil (insbesondere Schwefeldioxid- und Schwefeltrioxidanteil) haben, kann es zweckmäßig sein, eine mehrstufige Rauchgasentschwefelung vorzusehen, vorzugsweise eine mehrstufige Rauchgasentschwefelung umfassend einen Festbettreaktor zur Schwefeltrioxidabscheidung und eine Kalkwäsche (Nasswäsche) zur Schwefeldioxidabscheidung. Die bei der Vorrichtung beschriebenen Beispiele und Anmerkungen zur Rauchgasentschwefelungsanlage gelten analog für das Verfahren.

Eine Weiterbildung des Verfahrens sieht vor, dass der bei der Rauchgasentschwefelung entstehende Gips einem Gipswerk zugeführt wird zur Herstellung von Gipsprodukten, insbesondere Gipskartonplatten und/oder Fertiggipsmischungen.

Das vorgenannte Gipswerk kann seinen Bedarf an elektrischer Energie ganz oder teilweise aus der Stromerzeugung gemäß Schritt d1) decken. Auch kann das Gipswerk seinen Wärmebedarf ganz oder teilweise den bei der Verbrennung gemäß Schritt d1) entstehenden Verbrennungsgasen und/oder den Stromerzeugungs-Prozessen, insbesondere dem thermodynamischen Kreislauf des Dampfkraftprozesses, entnehmen.

Ist vorgesehen, den Wärmebedarf ganz oder teilweise dem Dampfkraftprozess zu entnehmen, so kann dies dadurch erfolgen, dass Dampf abgezweigt und dem Gipswerk zu Heiz- bzw. Erwärmungszwecken zugeführt wird. Beispielsweise kann der Dampf zur Erwärmung der Trocknungs- und/oder Kalziniereinrichtungen des Gipswerks eingesetzt werden. Ein wesentlicher Vorteil hierbei ist, dass sich auf diese Weise eine Kohlendioxidabgabe des Gipswerks an die Umwelt vermeiden lässt.

Die Erfindung wird nachstehend auch hinsichtlich weiterer Merkmale und Vorteile anhand der Beschreibung von Ausführungsbeispielen und unter Bezugnahme auf die beiliegenden schematischen Zeichnungen näher erläutert. Dabei zeigen
- FIG 1: ein Ausführungsbeispiel der erfindungsgemäßen Vorrichtung zur Entschwefelung von Erdöl,
- FIG 2: ein erstes Ausführungsbeispiel der Vorrichtung zur Erzeugung von Strom und Gips,
- FIG 3: ein zweites Ausführungsbeispiel der Vorrichtung zur Erzeugung von Strom und Gips, und
- FIG 4: ein drittes Ausführungsbeispiel der Vorrichtung zur Erzeugung von Strom und Gips.

Einander entsprechende Teile und Komponenten sind in den Figuren mit den gleichen Bezugszeichen bezeichnet.

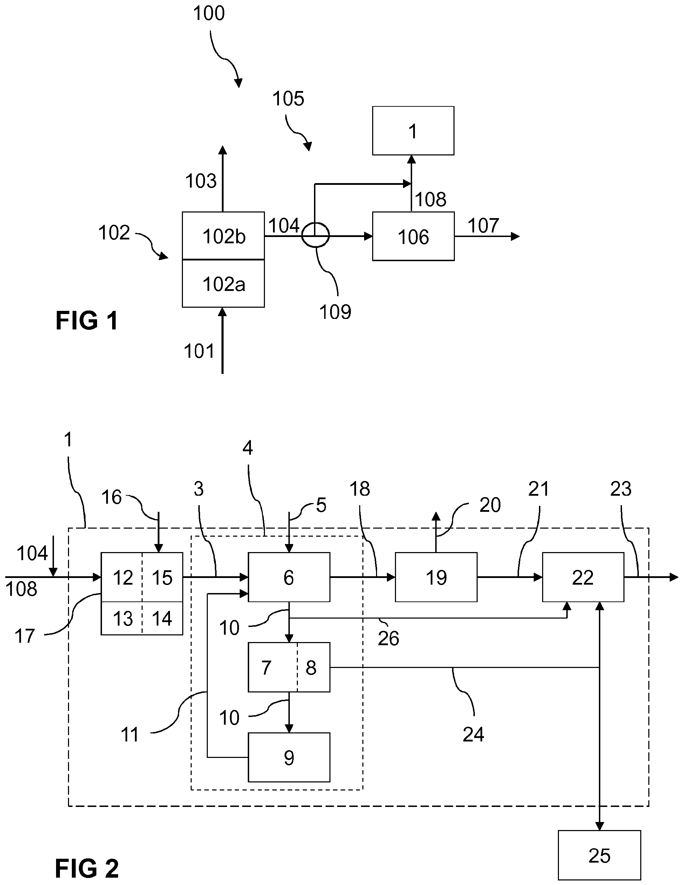

FIG 1 zeigt ein Ausführungsbeispiel der erfindungsgemäßen Vorrichtung 100 zur Entschwefelung von schwefelhaltigem Erdöl. Durch die Figur wird auch das erfindungsgemäße Verfahren zur Entschwefelung von Erdöl verdeutlicht.

Die Vorrichtung 100 umfasst eine Entschwefelungsanlage 102, der schwefelhaltiges Erdöl 101 zugeführt wird. Die Entschwefelungsanlage 102 umfasst eine Hydrieranlage 102a, vorzugsweise einen Hydrofiner, und eine Anlage 102b zur Durchführung einer Aminwäsche. Bei der Entschwefelung des schwefelhaltigen Erdöls 101 in der Entschwefelungsanlage 102 mittels Hydrierung in der Hydrieranlage 102a und Aminwäsche in der Anlage 102b wird einerseits entschwefeltes Erdöl 103 und andererseits ein schwefelwasserstoffhaltiges "Acid Gas" 104 gebildet. Das entschwefelte Erdöl 103 kann, gegebenenfalls nach weiteren Behandlungsschritten, an Verbraucher geliefert werden.

Weiter umfasst die Vorrichtung 100 eine Anlage 106 zur Gewinnung von elementarem Schwefel 107, beispielsweise einer Claus Anlage zur Ausführung eines Claus Prozesses. Über ein untenstehend näher beschriebenes Gasleitungssystem 105 kann dieser Anlage 106 "Acid Gas" 104 aus der Entschwefelungsanlage 102 zugeführt werden. Bei der Gewinnung von elementarem Schwefel 107 in dieser Anlage 106 wird neben dem elementaren Schwefel 107 als Abgas ein schwefelwasserstoffhaltiges "Tail Gas" 108 gebildet.

Als weitere Komponente der Vorrichtung 100 ist eine Vorrichtung 1 zur Erzeugung von Strom 24 und Gips 21 vorgesehen. Über das Gasleitungssystem 105 kann dieser Vorrichtung 1 "Tail Gas" 108 oder "Acid Gas" 104 oder ein Gemisch aus "Acid Gas" 104 und "Tail Gas" 108 zugeführt werden. Die Vorrichtung 1 umfasst eine Stromerzeugungseinrichtung 4 umfassend eine Verbrennungseinrichtung 6 zur Verbrennung des zugeführten Gases, wobei die bei der Verbrennung freiwerdende Energie zumindest teilweise zur Stromerzeugung eingesetzt wird. Weiter umfasst die Vorrichtung 1 eine Rauchgasentschwefelungsanlage 19 zur Entschwefelung der bei der Verbrennung entstehende schwefeloxidhaltige Verbrennungsabgase 18 unter Bildung von Gips 21.

Das bereits angesprochene Gasleitungssystem 105 dient sowohl der Zuführung von "Acid Gas" 104 von der Entschwefelungsanlage 102 zur Anlage 106 zur Gewinnung von elementarem Schwefel 107 und zur Vorrichtung 1 zur Erzeugung von Strom 24 und Gips 21 als auch der Zuführung von "Tail Gas" 108 von der Anlage 106 zur Gewinnung von elementarem Schwefel 107 zur Vorrichtung 1 zur Erzeugung von Strom 24 und Gips 21. Das Gasleitungssystem 105 weist eine Gasverteilereinrichtung 109 auf, die in einer ersten Stellung "Acid Gas" ausschließlich der Anlage 106 zur Gewinnung von elementarem Schwefel 107 zuführt, in einer zweiten Stellung "Acid Gas" ausschließlich der Vorrichtung 1 zur Erzeugung von Strom 24 und Gips 21 zuführt, und in einer Verteilerstellung einen ersten Teil des "Acid Gas" 104 der Anlage 106 zur Gewinnung von elementarem Schwefel 107 und einen zweiten Teil des "Acid Gas" 104 der Vorrichtung 1 zur Erzeugung von Strom 24 und Gips 21 zuführt. Das Verhältnis zwischen erstem Teil und zweitem Teil des "Acid Gas" 104 kann in der Verteilerstellung mittels der Gasverteilereinrichtung 109 eingestellt werden.

FIG 2 bis FIG 4 zeigen drei verschiedene Ausführungsbeispiele der Vorrichtung 1 zur Erzeugung von Strom und Gips und verdeutlichen damit auch das Verfahren zur Erzeugung von Strom und Gips.

Bei allen drei Ausführungsbeispielen ist auf der linken Seite jeweils nochmals die Zuführung von "Tail Gas" 108 und/oder "Acid Gas" 104 gezeigt. Wie bereits erläutert kann jedes Gas für sich oder auch eine Mischung aus "Tail Gas" 108 und "Acid Gas" 104 der Vorrichtung 1 und damit dem Verfahren zur Erzeugung von Strom und Gips zugeführt werden.

Konkret wird das Gas jeweils einer Stromerzeugungseinrichtung 4 zugeführt und dort, vorzugsweise unter Zuführung von Luft 5, verbrannt, wobei die bei der Verbrennung freiwerdende Energie zumindest teilweise zur Stromerzeugung eingesetzt wird.

In allen Ausführungsbeispielen ist gezeigt, dass das Gas vor der Zuführung zur Stromerzeugungseinrichtung 4 durch eine Gasmischeinrichtung 17 geführt wird, deren Aufgabe die Bereitstellung eines Gases 3 ist, dessen Zusammensetzung einer vorgegebenen Zusammensetzung entspricht bzw. innerhalb einer vorgegebenen Zusammensetzungsbandbreite und/oder dessen Heizwert einem vorgegebenen Heizwert entspricht bzw. in einer vorgegebenen Heizwertbandbreite liegt. Beispiele für diese vorgegebene Zusammensetzung bzw. Zusammensetzungsbandbreite und diesen vorgegebenen Heizwert bzw. die Heizwertbandbreite wurden vorstehend in der allgemeinen Beschreibung bereits angegeben. Eine derartige Gasmischeinrichtung 17 ist zur Verwirklichung der Erfindung nicht zwingend erforderlich.

Die Gasmischeinrichtung 17 umfasst eine Messeinrichtung 12, mit der die Zusammensetzung und/oder der Heizwert der ankommenden schwefelwasserstoffhaltigen Gase 3 ("Tail Gas" 108 oder "Acid Gas" 104 oder einer Mischung aus "Tail Gas" 108 und "Acid Gas" 104) ermittelt wird. Weiter umfasst die Gasmischeinrichtung 17 eine Auswertungseinrichtung 13, die die ermittelte Zusammensetzung mit der vorgegebenen Zusammensetzung bzw. der vorgegebenen Zusammensetzungsbandbreite bzw. den ermittelten Heizwert mit einem vorgegebenen Heizwert bzw. einer vorgegebenen Heizwertbandbreite vergleicht.

Ferner umfasst die Gasmischeinrichtung 17 eine Steuereinrichtung 14 und eine Zuführeinrichtung 15 für Erdgas. Die Steuereinrichtung 14 ermittelt bei einem von der Auswertungseinrichtung 13 ermittelten Abweichen von der vorgegebenen Zusammensetzung bzw. Zusammensetzungsbandbreite und/oder von dem vorgegebenen Heizwert bzw. der vorgegebenen Heizwertbandbreite einen zur Korrektur erforderlichen zusätzlichen Anteil an Erdgas, und sie wirkt derart mit der Zuführeinrichtung 15 zusammen, dass der ermittelte zur Korrektur erforderliche Anteil an Erdgas dem Gas 3 als Zumischgas 16 vor der Verbrennung über die Zuführeinrichtung 15 zugemischt wird. Alternativ oder additiv kann auch vorgesehen sein, dass die Steuereinrichtung zur Korrektur das Mischverhältnis zwischen "Tail Gas" 108 und zweitem Teil 109 des "Acid Gas" anpasst, beispielsweise über die Gasverteilereinrichtung 109.

Anschließend werden die gegebenenfalls hinsichtlich ihrer Zusammensetzung korrigierten schwefelwasserstoffhaltigen Gase 3 der Stromerzeugungseinrichtung 4 zugeführt. Die Stromerzeugungseinrichtung 4 im Ausführungsbeispiel nach FIG 2 umfasst einen thermodynamischen Kreislauf 11 eines Dampfkraftprozesses. Hierzu umfasst die Stromerzeugungseinrichtung 4 als Verbrennungsanlage 6 einen Dampferzeuger, dem das Gas 3 zugeführt wird. In dem Dampferzeuger werden die schwefelwasserstoffhaltigen Gase 3 verbrannt, unter Zuführung von Luft 5, vorzugsweise bei einer Verbrennungstemperatur von mindestens 1.000 °C. Die freiwerdende Energie wird im Dampferzeuger zumindest teilweise zur Dampferzeugung eingesetzt.

Die Stromerzeugungseinrichtung 4 umfasst ferner eine Dampfturbine 7, die dem Dampferzeuger nachgeschaltet ist. Der Dampfturbine 7 wird der von dem Dampferzeuger erzeugte Dampf 10 zugeführt. Die Dampfturbine 7 wiederum ist mit einem Generator 8 gekoppelt, der von der Dampfturbine 7 zur Erzeugung von Strom 24 angetrieben wird. Der erzeugte Strom 24 kann in ein öffentliches Stromnetz 25 eingespeist und/oder elektrischen Verbrauchern zur Verfügung gestellt werden.

Weiter umfasst die Stromerzeugungseinrichtung 4 einen Kondensator 9, der der Dampfturbine 7 nachgeschaltet ist, d.h. nach Durchströmen der Dampfturbine 7 wird der Dampf 10 dem Kondensator 9 zugeführt. Vorzugsweise handelt es sich hierbei um einen luftgekühlten Kondensator 9.

Nach dem Kondensieren im Kondensator 9 wird die kondensierte Flüssigkeit und/oder noch vorhandener Dampf wieder der Verbrennungseinrichtung 6, hier dem Dampferzeuger, zugeführt, der thermodynamische Kreislauf 11 des Dampfkraftprozesses ist damit geschlossen.

Alternativ ist es auch möglich, den thermodynamischen Kreislauf 11 zu unterbrechen und nach dem Prinzip der klassischen Kraft-Wärme-Kopplung die im Dampf nach Durchströmen der Dampfturbine 7 noch enthaltene thermische Energie anderweitig zu nutzen, beispielsweise für Heizzwecke im Rahmen von Nah- oder Fernwärmeeinrichtungen. In diesem Fall muss dem thermodynamischen Kreislauf 11 des Dampfkraftprozesses der Stromerzeugungseinrichtung 4 zum Ausgleich vor dem Dampferzeuger Wasser zugeführt werden, d.h. es liegt kein Kreislaufprozess im eigentlichen Sinn mehr vor. Diese Alternative ist in den Figuren nicht dargestellt.

Bei der Verbrennung der schwefelwasserstoffhaltigen Gase 3 in der Verbrennungseinrichtung 6, hier dem Dampferzeuger, entstehen Verbrennungsgase 18. Diese werden einer Rauchgasentschwefelungsanlage 19 zugeführt, dort gereinigt und anschließend als gereinigtes Abgas 20 abgegeben, beispielsweise direkt an die Umwelt, es können aber auch weitere Abgasreinigungsschritte nach- oder vorgeschaltet sein.

Die Verbrennungsgase 18 weisen aufgrund des Schwefelwasserstoffgehalts der Ausgangsgase im Vergleich zu Verbrennungsabgasen bekannter Anlagen einen sehr hohen Schwefeldioxid- und Schwefeltrioxidanteil auf. Dementsprechend muss eine hierfür geeignete Rauchgasentschwefelungsanlage 19 vorgesehen sein, beispielsweise eine mehrstufige Rauchgasentschwefelungsanlage, vorzugsweise eine mehrstufige Rauchgasentschwefelungsanlage umfassend einen Festbettreaktor zur Schwefeltrioxidabscheidung und eine Kalkwäsche zur Schwefeldioxidabscheidung. Das für die Rauchgasentschwefelung erforderliche Wasser kann bei einem in Meernähe gelegenen Standort der Vorrichtung mittels Meerwasserpumpen dem Meer entnommen werden. Nach der Rauchgasentschwefelungsanlage 19 kann das gereinigte Abgas 20 an die Umwelt abgegeben werden.

Bei der Rauchgasentschwefelung mit der Rauchgasentschwefelungsanlage 19 entsteht Gips 21, der einem Gipswerk 22 zur Herstellung von Gipsprodukten 23 zugeführt wird. Beispielsweise werden in diesem Gipswerk 22 Gipskartonplatten oder Fertiggipsmischungen unter Verwendung des Gipses 21 hergestellt.

Das Gipswerk 22 ist derart ausgebildet und eingerichtet, dass es seinen Bedarf an elektrischer Energie ganz oder teilweise aus dem von der Stromerzeugungseinrichtung 4 erzeugten Strom deckt, d. h. das Gipswerk 22 stellt einen der vorgenannten elektrischen Verbraucher dar, denen die Stromerzeugungseinrichtung 4 den aus der Verbrennung der schwefelwasserstoffhaltigen Abluft erzeugten Strom 24 zur Verfügung stellt.

Weiter deckt das Gipswerk 22 seinen Wärmebedarf ganz oder teilweise dadurch, dass es Dampf 26 aus dem vorstehend beschriebenen thermodynamischen Kreislauf 11 des Dampfkraftprozesses der Stromerzeugungseinrichtung 4 abzweigt und diesem abgezweigten Dampf 26 Wärmeenergie zu Erwärmungs- und/oder Heizzwecken entzieht. Beispielsweise kann der abgezweigte Dampf 26 auf diese Weise zum Kalzinieren des Gipses 21 und/oder zum Trocknen von Gipskartonplatten im Gipswerk 22 eingesetzt werden.

Nach dieser thermischen Nutzung kann der abgezweigte Dampf 26 freigesetzt oder anderweitig genutzt werden. In diesem Fall muss dem thermodynamischen Kreislauf 11 des Dampfkraftprozesses der Stromerzeugungseinrichtung 4 zum Ausgleich Wasser zugeführt werden. Oder der abgezweigte Dampf 26 wird nach der thermischen Nutzung wieder in den thermodynamischen Kreislauf 11 des Dampfkraftprozesses der Stromerzeugungseinrichtung 4 zurückgeführt, so dass dieser Kreislauf im Wesentlichen hinsichtlich des Dampfes weiterhin geschlossen ist. Die Weiterführung des abgezweigten Dampfes 26 nach der thermischen Nutzung und die gegebenenfalls erforderliche Zuführung von Wasser in den thermodynamischen Kreislauf 11 sind in FIG 2 nicht dargestellt.

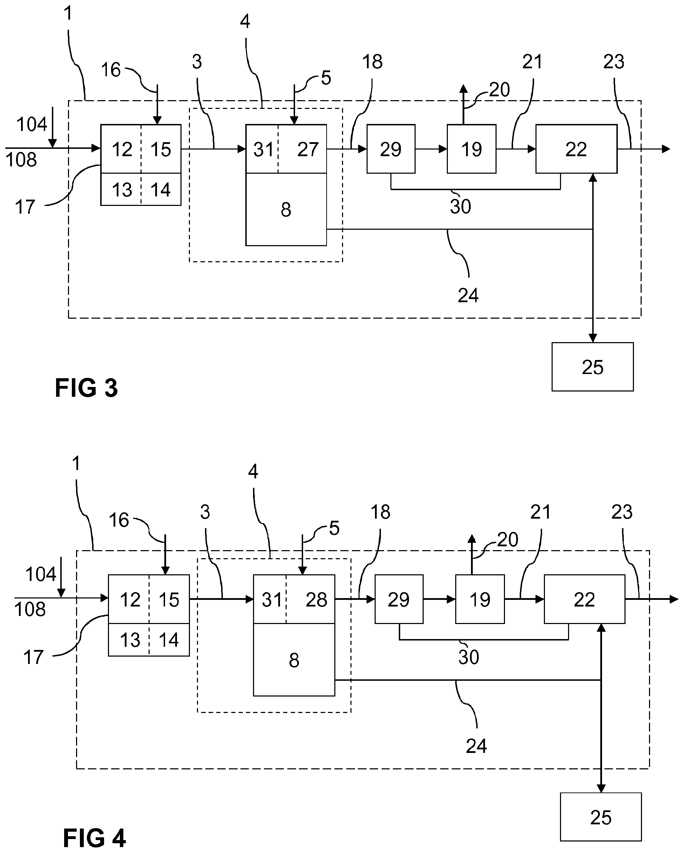

Das zweite Ausführungsbeispiel nach FIG 3 und das dritte Ausführungsbeispiel nach FIG 4 entsprechen hinsichtlich der Gaszuführung und der Gasmischeinrichtung 17 dem ersten Ausführungsbeispiel, so dass hierfür auf die vorausgehenden Ausführungen zu FIG 2 verwiesen wird.

Die zweite und dritte Ausführungsform unterscheiden sich jedoch in der verwendeten Stromerzeugungseinrichtung 4 vom ersten Ausführungsbeispiel. Anstelle eines Dampfkraftprozesses umfasst die Stromerzeugungseinrichtung 4 im zweiten Ausführungsbeispiel eine Gasturbine 27 und im dritten Ausführungsbeispiel ein Gasmotor 28, jeweils mit vorgeschaltetem Kompressor 31 für das zugeführte Gas 3. Dieser Gasturbine 27 bzw. diesem Gasmotor 28 werden die wiederum gegebenenfalls hinsichtlich ihrer Zusammensetzung korrigierten schwefelwasserstoffhaltigen Gase 3 zugeführt und in der Gastrubine 27 bzw. dem Gasmotor 28 verbrannt, unter Zuführung von Luft 5, vorzugsweise bei einer Verbrennungstemperatur von mindestens 1.000 °C. Die Gasturbine 27 bzw. der Gasmotor 28 sind mit einem Generator 8 gekoppelt, der von der Gasturbine 27 bzw. dem Gasmotor 28 zur Erzeugung von Strom 24 angetrieben wird. Der erzeugte Strom 24 kann wiederum wie im ersten Ausführungsbeispiel nach FIG 1 in ein öffentliches Stromnetz 25 eingespeist und/oder elektrischen Verbrauchern zur Verfügung gestellt werden.

Bei der Verbrennung der schwefelwasserstoffhaltigen Gase 3 in der Gasturbine 27 bzw. dem Gasmotor 28 entstehen Verbrennungsgase 18. Diese werden zur weiteren energetischen Verwertung vor der Weiterführung an eine Rauchgasentschwefelungsanlage 19 durch einen Wärmetauscher 29 geleitet. Im Wärmetauscher 29 wird den Verbrennungsgasen 18 thermische Energie entzogen und über einen geeigneten Fluidkreislauf 30 einem Gipswerk 22 zugeführt, so dass dieses Gipswerk 22 seinen Wärmebedarf ganz oder teilweise hierdurch decken kann. Beispielsweise kann die den Verbrennungsgasen 18 entzogene Wärme auf diese Weise zum Kalzinieren des Gipses 21 und/oder zum Trocknen von Gipskartonplatten im Gipswerk 22 eingesetzt werden.

Alle weiteren Merkmale der Weiterführung der Verbrennungsgase 18, der Rauchgasentschwefelungsanlage 19 und des Gipswerks 22 entsprechen der bereits anhand des ersten Ausführungsbeispiels nach FIG 2 besprochenen Lösung, so dass diesbezüglich auf die vorstehenden Ausführungen verwiesen wird.

### Bezugszeichenliste

- 1: Vorrichtung zur Erzeugung von Strom und Gips
- 3: Gas
- 4: Stromerzeugungseinrichtung
- 5: Luft
- 6: Verbrennungseinrichtung
- 7: Dampfturbine
- 8: Generator
- 9: Kondensator
- 10: Dampf
- 11: Thermodynamischer Kreislauf des Dampfkraftprozesses
- 12: Messeinrichtung
- 13: Auswertungseinrichtung
- 14: Steuereinrichtung
- 15: Zuführeinrichtung
- 16: Zumisch-Erdgas
- 17: Gasmischeinrichtung
- 18: Verbrennungsgase
- 19: Rauchgasentschwefelungsanlage
- 20: Gereinigtes Abgas
- 21: Gips
- 22: Gipswerk
- 23: Gipsprodukte
- 24: Strom
- 25: Öffentliches Stromnetz
- 26: Abgezweigter Dampf für Wärmebedarf des Gipswerks
- 27: Gasturbine
- 28: Gasmotor
- 29: Wärmetauscher
- 30: Fluidkreislauf
- 31: Kompressor
- 100: Vorrichtung zur Entschwefelung von Erdöl
- 101: Schwefelhaltiges Erdöl
- 102: Entschwefelungsanlage für schwefelhaltiges Erdöl
- 102a: Hydrieranlage
- 102b: Anlage zur Durchführung einer Aminwäsche
- 103: Entschwefeltes Erdöl
- 104: Acid Gas
- 105: Gasleitungssystem
- 106: Anlage zur Gewinnung von elementarem Schwefel 107 aus Acid Gas 104
- 107: Elementarer Schwefel
- 108: Tail Gas
- 109: Gasverteilereinrichtung

## Patentansprüche

1. Vorrichtung (100) zur Entschwefelung von Erdöl, umfassend
a) eine Entschwefelungsanlage (102) für schermetallhaltiges Erdöl (101), die neben dem entschwefelten Erdöl (103) ein schwefelwasserstoffhaltiges "Acid Gas" (104) bildet,
b) eine Anlage (106) zur Gewinnung von elementarem Schwefel (107) und eines schwefelwasserstoffhaltigen "Tail Gas" (108) als Abgas aus "Acid Gas" (104) der Entschwefelungsanlage (102),
c) eine Vorrichtung (1) zur Erzeugung von Strom (24) und Gips (21) aus "Tail Gas" (108) oder aus "Acid Gas" (104) oder aus einem Gemisch aus "Acid Gas" (104) und "Tail Gas" (108), umfassend
c1) eine Stromerzeugungseinrichtung (4) umfassend eine Verbrennungseinrichtung (6) zur Verbrennung von "Tail Gas" (108) oder "Acid Gas" (104) oder einer Mischung aus "Tail Gas" (108) und "Acid Gas" (104), wobei die bei der Verbrennung freiwerdende Energie zumindest teilweise zur Stromerzeugung eingesetzt wird,
c2) eine Rauchgasentschwefelungsanlage (19) zur Entschwefelung der bei der Verbrennung entstehende schwefeloxidhaltige Verbrennungsabgase (18) unter Bildung von Gips (21),
d) ein Gasleitungssystem (105) zur Zuführung von "Acid Gas" (104) von der Entschwefelungsanlage (102) zur Anlage (106) zur Gewinnung von elementarem Schwefel (107) und zur Vorrichtung (1) zur Erzeugung von Strom (24) und Gips (21) sowie zur Zuführung von "Tail Gas" (108) von der Anlage (106) zur Gewinnung von elementarem Schwefel (107) zur Vorrichtung (1) zur Erzeugung von Strom (24) und Gips (21),
d1) wobei das Gasleitungssystem (105) eine Gasverteilereinrichtung (109) aufweist, die in einer ersten Stellung "Acid Gas" ausschließlich der Anlage (106) zur Gewinnung von elementarem Schwefel (107) zuführt, in einer zweiten Stellung "Acid Gas" ausschließlich der Vorrichtung (1) zur Erzeugung von Strom (24) und Gips (21) zuführt, und in einer Verteilerstellung einen ersten Teil des "Acid Gas" (104) der Anlage (106) zur Gewinnung von elementarem Schwefel (107) und einen zweiten Teil des "Acid Gas" (104) der Vorrichtung (1) zur Erzeugung von Strom (24) und Gips (21) zuführt,
**gekennzeichnet durch**
e) eine Messeinrichtung (12) zur Ermittlung der Zusammensetzung und/oder des Heizwertes des Gases vor der Verbrennung in der Verbrennungseinrichtung (6),
f) eine Auswertungseinrichtung (13) zum Vergleich der ermittelten Zusammensetzung mit einer vorgegebenen Zusammensetzung oder einer vorgegebenen Zusammensetzungsbandbreite und/oder zum Vergleich des ermittelten Heizwertes mit einem vorgegebenen Heizwert oder einer vorgegebenen Heizwertbandbreite, und
g1) eine Steuereinrichtung (14) und eine Zuführeinrichtung (15) für Erdgas (16), wobei die Steuereinrichtung (14) bei einem von der Auswertungseinrichtung (13) ermittelten Abweichen von der vorgegebenen Zusammensetzung oder Zusammensetzungsbandbreite und/oder von dem vorgegebenen Heizwert oder der vorgegebenen Heizwertbandbreite einen zur Korrektur erforderlichen zusätzlicher Anteil an Erdgas ermittelt und dem Gas (3) vor der Verbrennung über die Zuführeinrichtung (15) zumischt, und/oder
g2) eine Steuereinrichtung (14), wobei die Steuereinrichtung (14) zur Korrektur das Mischverhältnis zwischen "Tail Gas" (108) und zweitem Teil des "Acid Gas" (104) anpasst.

2. Vorrichtung (100) nach Anspruch 1,
wobei die Verbrennungseinrichtung (6) der Stromerzeugungseinrichtung (4) ein Dampferzeuger umfasst oder ein Dampferzeuger ist, der Teil des thermodynamischen Kreislaufes (11) eines Dampfkraftprozesses ist, der wiederum eine dem Dampferzeuger nachgeschaltete Dampfturbine (7) und einen der Dampfturbine (7) nachgeschalteten Kondensator (9) umfasst, und
wobei zur Stromerzeugung ein von der Dampfturbine (7) angetriebener Generator (8) vorgesehen ist.

3. Vorrichtung (100) nach Anspruch 1 oder 2,
wobei die Stromerzeugungseinrichtung (4) eine Gasturbine (27) und/oder einen Gasmotor (28) umfasst, und
wobei zur Stromerzeugung ein von der Gasturbine (27) und/oder dem Gasmotor (28) angetriebener Generator (8) vorgesehen ist.

4. Vorrichtung (100) nach einem der Ansprüche 1 bis 3, wobei die Vorrichtung (1) zur Erzeugung von Strom (24) und Gips (21) ein Gipswerk (22) umfasst, das den bei der Rauchgasentschwefelung (19) entstehenden Gips (21) zur Herstellung von Gipsprodukten (23) einsetzt.

5. Verfahren zur Entschwefelung von Erdöl mit einer Vorrichtung nach einem der vorhergehenden Ansprüche, umfassend folgende Schritte:
a) Bereitstellung von schwefelhaltigem Erdöl (101);
b) Entschwefelung des schwefelhaltigen Erdöls (101) mittels der Entschwefelungsanlage (102), wobei neben dem entschwefelten Erdöl (103) ein schwefelwasserstoffhaltiges "Acid Gas" (104) gebildet wird;
c) Einstellung der Gasverteilereinrichtung (109) des Gasleitungssystems (105) in die erste Stellung oder in die zweite Stellung oder in die Verteilerstellung, wobei in der ersten Stellung "Acid Gas" ausschließlich der Anlage (106) zur Gewinnung von elementarem Schwefel (107) zugeführt wird, in der zweiten Stellung "Acid Gas" ausschließlich der Vorrichtung (1) zur Erzeugung von Strom (24) und Gips (21) zugeführt wird, und in der Verteilerstellung ein erster Teil des "Acid Gas" (104) der Anlage (106) zur Gewinnung von elementarem Schwefel (107) und eines schwefelwasserstoffhaltigen "Tail Gas" (108) und ein zweiter Teil des "Acid Gas" (104) der Vorrichtung (1) zur Erzeugung von Strom (24) und Gips (21) zugeführt wird;
d) Erzeugung von Strom (24) und Gips (21) aus "Tail Gas" (108) oder aus "Acid Gas" (104) oder aus einem Gemisch aus "Acid Gas" (104) und "Tail Gas" (108) mittels der Vorrichtung (1) zur Erzeugung von Strom (24) und Gips (21),
d1) wobei "Tail Gas" (108) oder "Acid Gas" (104) oder einer Mischung aus "Tail Gas" (108) und "Acid Gas" (104) der Verbrennungseinrichtung (6) der Stromerzeugungseinrichtung (4) zugeführt und dort verbrannt wird, wobei die bei der Verbrennung freiwerdende Energie zumindest teilweise zur Stromerzeugung eingesetzt wird,
d2) wobei bei der Verbrennung entstehende schwefeloxidhaltige Verbrennungsabgase (18) einer Rauchgasentschwefelung mittels der Rauchgasentschwefelungsanlage (19) zugeführt werden, und
d3) wobei bei der Rauchgasentschwefelung Gips (21) gebildet wird,
e) wobei die Zusammensetzung und/oder der Heizwert des der Stromerzeugungseinrichtung (4) gemäß Schritt d1) zugeführten Gases vor der Verbrennung in der Verbrennungseinrichtung (6) ermittelt wird,
f) wobei die ermittelte Zusammensetzung mit einer vorgegebenen Zusammensetzung oder einer vorgegebenen Zusammensetzungsbandbreite und/oder der ermittelte Heizwert mit einem vorgegebenen Heizwert oder einer vorgegebenen Heizwertbandbreite verglichen wird, und
g) wobei bei einem Abweichen von der vorgegebenen Zusammensetzung oder Zusammensetzungsbandbreite und/oder von dem vorgegebenen Heizwert oder der vorgegebenen Heizwertbandbreite ein zur Korrektur erforderlicher zusätzlicher Anteil an Erdgas ermittelt und dem Gas vor der Verbrennung zugemischt wird und/oder wobei zur Korrektur das Mischverhältnis zwischen "Tail Gas" (108) und zweitem Teil des "Acid Gas" (104) anpasst wird.

6. Verfahren nach Anspruch 5, wobei die Verbrennung gemäß Schritt d1) bei einer Verbrennungstemperatur von mindestens 1.000 °C erfolgt.

7. Verfahren nach einem der Ansprüche 5 oder 6,
wobei die Verbrennungseinrichtung (6) der Stromerzeugungseinrichtung (4) einen Dampferzeuger umfasst oder ein Dampferzeuger ist, der Teil des thermodynamischen Kreislaufes (11) eines Dampfkraftprozesses ist, der wiederum eine dem Dampferzeuger nachgeschaltete Dampfturbine (7) und einen der Dampfturbine (7) nachgeschalteten Kondensator (9) umfasst, und
wobei die bei der Verbrennung freiwerdende Energie dadurch zumindest teilweise zur Stromerzeugung eingesetzt wird, dass die freiwerdende Energie zunächst zumindest teilweise im Dampferzeuger zur Dampferzeugung eingesetzt wird und der erzeugte Dampf dann zumindest teilweise der Dampfturbine (7) zugeführt wird, die zur Stromerzeugung einen Generator (8) antreibt.

8. Verfahren nach einem der Ansprüche 5 bis 7,
wobei die Stromerzeugungseinrichtung (4) eine Gasturbine (27) und/oder einen Gasmotor (28) umfasst, und
wobei die Stromerzeugung durch einen von der Gasturbine (27) und/oder dem Gasmotor (28) angetriebenen Generator (8) erfolgt.

9. Verfahren nach einem der Ansprüche 5 bis 8, wobei
die vorgegebene Zusammensetzung oder die vorgegebenen Zusammensetzungsbandbreite folgende Anteile in Molprozent vorsieht:
Schwefelwasserstoff: 3% bis 70%, insbesondere 40% bis 60%, vorzugsweise etwa 50%, und/oder
Kohlendioxid: 10% bis 90%, insbesondere 40% bis 60%, vorzugsweise etwa 50%,
und/oder wobei der vorgegebene Heizwert oder die vorgegebene Heizwertbandbreite bei 9 bis 30 MJ/m³ (in Normbedingungen), insbesondere bei 15 bis 25 MJ/m³ (in Normbedingungen), vorzugsweise bei etwa 20 MJ/m³ (in Normbedingungen) liegt.

## Claims

1. Device (100) for the desulphurisation of petroleum, comprising
a) a desulphurisation plant (102) for petroleum (101) containing shear metals, which, in addition to the desulphurised petroleum (103), forms an acid gas (104) containing hydrogen sulphide,
b) a plant (106) for the recovery of elemental sulphur (107) and a hydrogen sulphide containing tail gas (108) as waste gas from acid gas (104) of the desulphurisation plant (102),
c) a device (1) for producing electricity (24) and gypsum (21) from tail gas (108) or from acid gas (104) or from a mixture of acid gas (104) and tail gas (108), comprising
c1) a power generating device (4) comprising a combustion device (6) for the combustion of tail gas (108) or acid gas (104) or a mixture of tail gas (108) and acid gas (104), wherein the energy released during the combustion is at least partially used for electricity generation,
c2) a flue gas desulphurisation plant (19) for desulphurising the combustion flue gases (18) containing sulphur oxides which are produced during combustion, with the formation of gypsum (21),
d) a gas pipe system (105) for supplying acid gas (104) from the desulphurisation plant (102) to the elemental sulphur (107) recovery plant (106) and to the electricity (24) and gypsum (21) generating device (1) and for supplying tail gas (108) from the elemental sulphur (107) recovery plant (106) to the electricity (24) and gypsum (21) generating device (1),
d1) wherein the gas pipe system (105) comprises a gas distribution unit (109) which in a first position supplies acid gas exclusively to the elemental sulphur (107) recovery plant (106), in a second position supplies acid gas exclusively to the electricity (24) and gypsum (21) generating device (1), and, in a distribution position, supplying a first portion of the acid gas (104) to the elemental sulphur (107) recovery plant (106) and a second portion of the acid gas (104) to the electricity (24) and gypsum (21) generating device (1),
**characterised by**
e) a measuring device (12) for determining the composition and/or calorific value of the gas before combustion in the combustion device (6),
f) an evaluation device (13) for comparing the determined composition with a predetermined composition or a predetermined composition range and/or for comparing the determined calorific value with a predetermined calorific value or a predetermined calorific value range, and
g1) a control device (14) and a feed device (15) for natural gas (16), wherein the control device (14) determines, in the event of a deviation from the predetermined composition or composition range and/or from the predetermined calorific value or the predetermined calorific value range determined by the evaluation device (13), an additional proportion of natural gas required for correction and admixes it to the gas (3) via the feed device (15) before combustion, and/or
g2) a control means (14), wherein the control means (14) adjusts the mixing ratio between the tail gas (108) and the second part of the acid gas (104) for correction.

2. Device (100) according to claim 1,
wherein the combustion device (6) of the power generating device (4) comprises or is a steam generator which is part of the thermodynamic cycle (11) of a steam power process which in turn comprises a steam turbine (7) downstream of the steam generator and a condenser (9) downstream of the steam turbine (7), and
wherein a generator (8) driven by the steam turbine (7) is provided for electricity generation.

3. Device (100) according to claim 1 or 2,
wherein the power generating device (4) comprises a gas turbine (27) and/or a gas engine (28), and
wherein a generator (8) driven by the gas turbine (27) and/or the gas engine (28) is provided for electricity generation.

4. Device (100) according to one of claims 1 to 3, wherein the device (1) for generating electricity (24) and gypsum (21) comprises a gypsum plant (22) which uses the gypsum (21) produced during flue gas desulphurisation (19) to produce gypsum products (23).

5. Method for the desulphurisation of petroleum with a device according to any one of the preceding claims, comprising the following steps:
a) provision of petroleum (101) containing shear metals;
b) desulphurisation of the sulphur-containing petroleum (101) by means of the desulphurisation unit (102), whereby an acid gas (104) containing hydrogen sulphide is formed in addition to the desulphurised petroleum (103);
c) adjustment of the gas distribution unit (109) of the gas pipe system (105) to the first position or to the second position or to the distribution position, wherein in the first position acid gas is supplied exclusively to the plant (106) for the recovery of elemental sulphur (107), in the second position acid gas is supplied exclusively to the device (1) for the generation of electricity (24) and gypsum (21), and in the distribution position, a first portion of the acid gas (104) is supplied to the elemental sulphur recovery plant (106) and a hydrogen sulphide containing tail gas (108) and a second portion of the acid gas (104) is supplied to the electricity (24) and gypsum (21) generation device (1);
d) producing electricity (24) and gypsum (21) from tail gas (108) or from acid gas (104) or from a mixture of acid gas (104) and tail gas (108) by means of the device (1) for producing electricity (24) and gypsum (21),
d1) wherein "tail gas" (108) or "acid gas" (104) or a mixture of "tail gas" (108) and "acid gas" (104) is supplied to the combustion device (6) of the power generation device (4) and is burnt there, wherein the energy released during the combustion is at least partially used for power generation,
d2) wherein combustion exhaust gases (18) containing sulphur oxide which are produced during combustion are fed to a flue gas desulphurisation by means of the flue gas desulphurisation system (19), and
d3) whereby gypsum (21) is formed during flue gas desulphurisation,
e) wherein the composition and/or the calorific value of the gas supplied to the power generating device (4) according to step d1) is determined before combustion in the combustion device (6),
f) wherein the determined composition is compared with a predetermined composition or a predetermined composition range and/or the determined calorific value is compared with a predetermined calorific value or a predetermined calorific value range, and
g) wherein, in the event of a deviation from the predetermined composition or composition range and/or from the predetermined calorific value or the predetermined calorific value range, an additional proportion of natural gas required for correction is determined and is admixed to the gas prior to combustion and/or wherein the mixing ratio between "tail gas" (108) and second part of the "acid gas" (104) is adjusted for correction.

6. Process according to claim 5, wherein the combustion according to step d1) takes place at a combustion temperature of at least 1,000 °C.

7. process according to one of claims 5 or 6,
wherein the combustion means (6) of the power generating means (4) comprises or is a steam generator which is part of the thermodynamic cycle (11) of a steam power process which in turn comprises a steam turbine (7) downstream of the steam generator and a condenser (9) downstream of the steam turbine (7), and
wherein the energy released during combustion is at least partially used to generate electricity in that the released energy is first at least partially used in the steam generator to generate steam and the generated steam is then at least partially fed to the steam turbine (7), which drives a generator (8) to generate electricity.

8. process according to any one of claims 5 to 7,
wherein the power generation device (4) comprises a gas turbine (27) and/or a gas engine (28), and
wherein the electricity is generated by a generator (8) driven by the gas turbine (27) and/or the gas engine (28).

9. a method according to any one of claims 5 to 8, wherein
the specified composition or the specified composition range provides for the following proportions in mole percent:
Hydrogen sulphide: 3% to 70%, in particular 40% to 60%, preferably about 50%, and/or
Carbon dioxide: 10% to 90%, especially 40% to 60%, preferably about 50%,
and/or wherein the predetermined calorific value or the predetermined calorific value range is 9 to 30 MJ/m³ (in standard conditions), in particular 15 to 25 MJ/m³ (in standard conditions), preferably about 20 MJ/m³ (in standard conditions).

## Revendications

1. Dispositif (100) de désulfuration du pétrole, comprenant
a) une unité de désulfuration (102) du pétrole contenant des métaux de cisaillement (101) qui, outre le pétrole désulfuré (103), forme un "acid gas" (104) contenant du sulfure d'hydrogène,
b) une installation (106) pour la récupération de soufre élémentaire (107) et d'un "tail gas" (108) contenant de l'hydrogène sulfuré comme gaz d'échappement du "acid gas" (104) de l'installation de désulfuration (102),
c) un dispositif (1) pour la production d'électricité (24) et de gypse (21) à partir de "tail gas" (108) ou de "acid gas" (104) ou d'un mélange de "acid gas" (104) et de "tail gas" (108), comprenant
c1) un dispositif de production de courant (4) comprenant un dispositif de combustion (6) pour la combustion de "tail gas" (108) ou de "acid gas" (104) ou d'un mélange de "tail gas" (108) et de "acid gas" (104), l'énergie libérée lors de la combustion étant utilisée au moins partiellement pour la production de courant,
c2) une installation de désulfuration des gaz de fumée (19) pour la désulfuration des gaz de combustion (18) contenant de l'oxyde de soufre qui se forment lors de la combustion, avec formation de gypse (21),
d) un système de conduite de gaz (105) pour amener du "acid gas" (104) de unité de désulfuration (102) à l'installation (106) d'extraction de soufre élémentaire (107) et au dispositif (1) de production d'électricité (24) et de gypse (21), et pour amener du "tail gas" (108) de l'installation (106) d'extraction de soufre élémentaire (107) au dispositif (1) de production d'électricité (24) et de gypse (21),
d1) le système de conduite de gaz (105) comprenant un dispositif de distribution de gaz (109) qui, dans une première position, alimente en "gaz acide" exclusivement l'installation (106) d'extraction de soufre élémentaire (107), et qui, dans une deuxième position, alimente en "gaz acide" exclusivement le dispositif (1) de production d'électricité (24) et de gypse (21), et, dans une position de distribution, envoie une première partie du "acid gas" (104) à l'installation (106) d'obtention de soufre élémentaire (107) et une deuxième partie du "acid gas" (104) au dispositif (1) de production d'électricité (24) et de plâtre (21),
**caractérisé par**
e) un dispositif de mesure (12) pour déterminer la composition et/ou le pouvoir calorifique du gaz avant la combustion dans le dispositif de combustion (6),
f) un dispositif d'évaluation (13) pour comparer la composition déterminée avec une composition prédéfinie ou une largeur de bande de composition prédéfinie et/ou pour comparer le pouvoir calorifique déterminé avec un pouvoir calorifique prédéfini ou une largeur de bande de pouvoir calorifique prédéfinie, et
g1) un dispositif de commande (14) et un dispositif d'amenée (15) pour du gaz naturel (16), le dispositif de commande (14) déterminant, en cas d'écart déterminé par le dispositif d'évaluation (13) par rapport à la composition ou à la largeur de bande de composition prédéfinie et/ou par rapport au pouvoir calorifique prédéfini ou à la largeur de bande de pouvoir calorifique prédéfinie, une proportion supplémentaire de gaz naturel nécessaire à la correction et l'ajoutant au gaz (3) avant la combustion par le biais du dispositif d'amenée (15),
et/ou
g2) un dispositif de commande (14), dans lequel le dispositif de commande (14) adapte le rapport de mélange entre le "tail gas" (108) et la deuxième partie du "acid gas" (104) pour la correction.

2. Dispositif (100) selon la revendication 1,
dans lequel le dispositif de combustion (6) du dispositif de production de courant (4) comprend un générateur de vapeur ou est un générateur de vapeur qui fait partie du cycle thermodynamique (11) d'un processus de production d'énergie à partir de la vapeur, qui comprend à son tour une turbine à vapeur (7) en aval du générateur de vapeur et un condenseur (9) en aval de la turbine à vapeur (7),
et
un générateur (8) entraîné par la turbine à vapeur (7) étant prévu pour la production de courant.

3. Dispositif (100) selon la revendication 1 ou 2,
dans lequel le dispositif de production de courant (4) comprend une turbine à gaz (27) et/ou un moteur à gaz (28), et
un générateur (8) entraîné par la turbine à gaz (27) et/ou le moteur à gaz (28) étant prévu pour la production d'électricité.

4. Dispositif (100) selon l'une des revendications 1 à 3, dans lequel le dispositif (1) de production d'électricité (24) et de plâtre (21) comprend une usine à plâtre (22) qui utilise le plâtre (21) produit lors de la désulfuration des fumées (19) pour fabriquer des produits à base de plâtre (23).

5. Procédé de désulfuration du pétrole à l'aide d'un dispositif selon l'une des revendications précédentes, comprenant les étapes suivantes:
a) Mise à disposition de pétrole sulfureux (101);
b) désulfuration du pétrole contenant du soufre (101) au moyen de unité de désulfuration (102), un "acid gas" (104) contenant du sulfure d'hydrogène étant formé à côté du pétrole désulfuré (103);
c) le réglage du dispositif de distribution de gaz (109) du système de conduite de gaz (105) dans la première position ou dans la deuxième position ou dans la position de distribution, dans la première position le "gaz acide" est amené exclusivement à l'installation (106) d'extraction de soufre élémentaire (107), dans la deuxième position le "gaz acide" est amené exclusivement au dispositif (1) de production d'électricité (24) et de gypse (21), et, dans la position de distribution, une première partie du "acid gas" (104) est envoyée à l'installation (106) d'obtention de soufre élémentaire (107) et d'un "tail gas" (108) contenant de l'hydrogène sulfuré, et une deuxième partie du "acid gas" (104) est envoyée au dispositif (1) de production d'électricité (24) et de plâtre (21);
d) la production d'électricité (24) et de gypse (21) à partir de "tail gas" (108) ou de "acid gas" (104) ou d'un mélange de "acid gas" (104) et de "tail gas" (108) au moyen du dispositif (1) de production d'électricité (24) et de gypse (21),
d1) dans lequel du "tail gas" (108) ou du "acid gas" (104) ou un mélange de "tail gas" (108) et de "acid gas" (104) est amené au dispositif de combustion (6) du dispositif de production de courant (4) et y est brûlé, l'énergie libérée lors de la combustion étant utilisée au moins partiellement pour la production de courant,
d2) les gaz d'échappement de combustion (18) contenant de l'oxyde de soufre qui se forment lors de la combustion étant amenés à une désulfuration des gaz de fumée au moyen de l'installation de désulfuration des gaz de fumée (19), et
d3) dans lequel du gypse (21) est formé lors de la désulfuration des gaz de fumée,
e) la composition et/ou le pouvoir calorifique du gaz amené au dispositif de production de courant (4) selon l'étape d1) étant déterminés avant la combustion dans le dispositif de combustion (6),
f) la composition déterminée étant comparée à une composition prédéterminée ou à une largeur de bande de composition prédéterminée et/ou le pouvoir calorifique déterminé étant comparé à un pouvoir calorifique prédéterminé ou à une largeur de bande de pouvoir calorifique prédéterminée, et
g) dans lequel, en cas d'écart par rapport à la composition ou à la largeur de bande de composition prédéfinie et/ou par rapport au pouvoir calorifique prédéfini ou à la largeur de bande de pouvoir calorifique prédéfinie, une part supplémentaire de gaz naturel nécessaire à la correction est déterminée et mélangée au gaz avant la combustion et/ou dans lequel, pour la correction, le rapport de mélange entre le "tail gas" (108) et la deuxième partie du "acid gas" (104) est adapté.

6. Procédé selon la revendication 5, dans lequel la combustion selon l'étape d1) a lieu à une température de combustion d'au moins 1000°C.

7. Procédé selon l'une des revendications 5 ou 6,
dans lequel le dispositif de combustion (6) du dispositif de production de courant (4) comprend un générateur de vapeur ou est un générateur de vapeur qui fait partie du cycle thermodynamique (11) d'un processus de production d'énergie à partir de la vapeur, qui comprend à son tour une turbine à vapeur (7) en aval du générateur de vapeur et un condenseur (9) en aval de la turbine à vapeur (7),
et
l'énergie libérée lors de la combustion étant utilisée au moins partiellement pour la production de courant par le fait que l'énergie libérée est d'abord utilisée au moins partiellement dans le générateur de vapeur pour la production de vapeur et que la vapeur produite est ensuite amenée au moins partiellement à la turbine à vapeur (7) qui entraîne un générateur (8) pour la production de courant.

8. Procédé selon l'une quelconque des revendications 5 à 7,
dans lequel le dispositif de production de courant (4) comprend une turbine à gaz (27) et/ou un moteur à gaz (28), et
la production d'électricité étant assurée par un générateur (8) entraîné par la turbine à gaz (27) et/ou le moteur à gaz (28).

9. Procédé selon l'une quelconque des revendications 5 à 8, dans lequel
la composition prédéterminée ou la fourchette de composition prédéterminée prévoit les proportions suivantes en pourcentage molaire:
sulfure d'hydrogène : 3% à 70%, en particulier 40% à 60%, de préférence environ 50%, et/ou
dioxyde de carbone: 10% à 90%, en particulier 40% à 60%, de préférence environ 50%,
et/ou dans lequel le pouvoir calorifique prédéterminé ou la largeur de bande du pouvoir calorifique prédéterminé est de 9 à 30 MJ/m³ (dans des conditions normales), en particulier de 15 à 25 MJ/m³ (dans des conditions normales), de préférence d'environ 20 MJ/m³ (dans des conditions normales).
